# EUROPÄISCHE PATENTANMELDUNG

(11) **EP 4 389 377 A1**
(43) Veröffentlichungstag der Anmeldung: **26.06.2024**
(21) Anmeldenummer: 23216960.7
(22) Anmeldetag: 15.12.2023
(51) Int. Cl.: B27B 17/08, B25F 5/00

(54) **HANDWERKZEUGMASCHINE**

(30) Priorität: 20.12.2022 DE 102022214002
(71) Anmelder: Robert Bosch GmbH, 70442 Stuttgart (DE)
(72) Erfinder: ZADOR, Endre, IP38DH Ipswich (Suffolk) (GB)

(57) **Zusammenfassung**

Die Erfindung betrifft eine Handwerkzeugmaschine (1), insbesondere eine Kettensäge (2) und vorteilhafterweise eine Einhandkettensäge. Die Handwerkzeugmaschine (1) weist eine Motor-Getriebe-Einheit (10) und ein Gehäuse (3) auf. Die Motor-Getriebe-Einheit (10) ist zumindest teilweise innerhalb des Gehäuses (3) angeordnet. Die Motor-Getriebe-Einheit (10) weist einen Elektromotor (20) und ein Planetengetriebe (30) auf. Das Planetengetriebe (30) weist zumindest ein drehfestes Hohlrad (32), ein vom Elektromotor (20) antreibbares Sonnenrad (31) und zumindest ein an einem Planetenträger (34) gelagertes Planetenrad (37) auf. Ein Abtriebselement (40) der Motor-Getriebe-Einheit (30), insbesondere ein Kettenrad (41) zum Antrieb einer Sägekette (42), ist mit dem Planetenträger (34) verbunden. Der Planetenträger (34) ist mit einem Planetenträgerlager (35) am Gehäuse (3) gelagert.

## Beschreibung

Die Erfindung betrifft eine Handwerkzeugmaschine mit Elektroantrieb, beispielsweise eine Kettensäge und insbesondere eine Einhandkettensäge, also eine Kettensäge, die zur Bedienung mit einer Hand vorgesehen ist.

### Stand der Technik

Aus dem Stand der Technik sind Handwerkzeugmaschinen mit Elektroantrieb bekannt, bei denen ein Elektromotor einen Antrieb der Handwerkzeugmaschine bereitstellt. Dabei muss gegebenenfalls ein Getriebe vorgesehen werden, um eine Drehzahl des Elektromotors an eine für die Handwerkzeugmaschine notwendige Drehzahl anzupassen. Eine Antriebseinheit bestehend aus Elektromotor und Getriebe kann dabei jedoch voluminös sein, so dass die Handwerkzeugmaschine groß und damit unhandlich wird.

### Offenbarung der Erfindung

Eine Aufgabe der Erfindung ist es, eine verbesserte Handwerkzeugmaschine bereitzustellen, die kompakter als die im Stand der Technik bekannten Handwerkzeugmaschinen ausgestaltet ist. Diese Aufgabe wird mit dem Gegenstand des unabhängigen Patentanspruchs gelöst. Vorteilhafte Weiterbildungen sind in den abhängigen Patentansprüchen angegeben.

Die Erfindung betrifft eine Handwerkzeugmaschine, insbesondere eine Kettensäge und vorteilhafterweise eine Einhandkettensäge. Die Handwerkzeugmaschine weist eine Motor-Getriebe-Einheit und ein Gehäuse auf. Die Motor-Getriebe-Einheit ist zumindest teilweise innerhalb des Gehäuses angeordnet. Die Motor-Getriebe-Einheit weist einen Elektromotor und ein Planetengetriebe auf. Das Planetengetriebe weist zumindest ein drehfestes Hohlrad, ein vom Elektromotor antreibbares Sonnenrad und zumindest ein an einem Planetenträger gelagertes Planetenrad auf. Es kann vorgesehen sein, dass das Planetengetriebe eine Mehrzahl von am Planetenträger gelagerten Planetenrädern aufweist, beispielsweise zwei, drei oder vier Planetenräder. Ein Abtriebselement der Motor-Getriebe-Einheit, insbesondere ein Kettenrad zum Antrieb einer Sägekette, ist mit dem Planetenträger verbunden, insbesondere einstückig ausgebildet. Der Planetenträger ist mit einem Planetenträgerlager am Gehäuse gelagert, insbesondere drehbar gelagert. Unter einem drehfesten Hohlrad kann insbesondere verstanden werden, dass das Hohlrad in Umfangsrichtung unverlagerbar ist, jedoch axial verlagerbar und/oder kipp- oder taumelbar relativ zur bzw. um die Drehachse ausgebildet ist. Dadurch können beispielsweise Toleranzen ausgeglichen werden, Setzbewegungen ermöglicht werden und/oder eine Kraft- bzw. Reibungsarme Lagerung bzw. Abwälzung der Planeten und/oder des Planetenträgers erreicht werden.

Eine solche Anordnung der Motor-Getriebe-Einheit in einer Handwerkzeugmaschine erlaubt eine kompakte Ausgestaltung der Handwerkzeugmaschine. Es kann vorgesehen sein, dass das Hohlrad ortsfest ist. Dies kann insbesondere bedeuten, dass das Hohlrad axial unverlagerbar ist, also axial nicht verlagert werden kann.

In einer Ausführungsform ist das Abtriebselement einseitig belastet, wenn die Handwerkzeugmaschine in Betrieb ist. Eine solche einseitige Belastung kann beispielsweise durch eine Kette einer Kettensäge verursacht sein, es sind jedoch auch alternative Ausgestaltungen einer Handwerkzeugmaschine denkbar, bei der das Abtriebselement einseitig belastet ist. In einer solchen Ausgestaltung kann insbesondere vorgesehen sein, dass das Abtriebselement und der Planetenträger ausschließlich mit dem Planetenträgerlager gelagert sind, so dass insbesondere kein weiteres Lager für den Planetenträger vorgesehen ist. Dadurch wird ebenfalls der kompakte Aufbau der Handwerkzeugmaschine unterstützt.

In einer Ausführung umfasst die Motor-Getriebe-Einheit eine Zentralwelle. In einer Ausführungsform ist eine Zentralwelle mit einem ersten Zentralwellenlager am Gehäuse gelagert. Das erste Zentralwellenlager kann dabei ein Gleitlager oder ein Wälzlager, beispielsweise ein Kugellager sein. Ein Rotor des Elektromotors ist mit der Zentralwelle fest verbunden. Diese Verbindung kann beispielsweise als Presspassung, aber auch als Passfederverbindung oder dergleichen ausgestaltet sein. Ein Stator des Elektromotors umgibt den Rotor zumindest teilweise, insbesondere vollständig. Der Stator kann den Rotor umschließen. Das Sonnenrad ist mit der Zentralwelle fest verbunden. Diese Verbindung kann insbesondere als Presspassung oder mit einer anderen Wellen-Naben-Verbindung ausgestaltet sein. Durch die Zentralwelle, die gleichzeitig mit dem Sonnenrad des Planetengetriebes und mit dem Rotor verbunden ist, ergibt sich eine weitere Unterstützung des kompakten Aufbaus der Handwerkzeugmaschine.

In einer Ausführungsform ist die Zentralwelle mit einem zweiten Zentralwellenlager am Planetenträger gelagert. Das zweite Zentralwellenlager kann insbesondere ein Wälzlager oder ein Gleitlager, beispielsweise ein Kugellager sein. Dies ermöglicht einen stabilen Aufbau der Motor-Getriebe-Einheit. Alternativ kann vorgesehen sein, dass die Zentralwelle nur über das Sonnenrad des Planetengetriebes gelagert ist und kein eigenes zweites Zentralwellenlager vorgesehen ist.

In einer Ausführungsform ist das zweite Zentralwellenlager zumindest teilweise, insbesondere vollständig, in einem Innenbereich des Planetenträgerlagers angeordnet. Insbesondere kann das Planetenträgerlager einen Innenzylinder aufweisen, in dem der Planetenträger zumindest teilweise angeordnet ist. Das zweite Zentralwellenlager kann teilweise und insbesondere vollständig innerhalb des Innenzylinders des Planetenträgerlagers angeordnet sein. Das zweite Zentralwellenlager kann in einem Innenzylinder des Planetenträgers angeordnet sein.

In einer Ausführungsform sind der Rotor und das Sonnenrad zwischen dem ersten Zentralwellenlager und dem zweiten Zentralwellenlager angeordnet. Dies ermöglicht ebenfalls einen kompakten Aufbau der Handwerkzeugmaschine. In einer Ausführungsform sind der Rotor, das Lüfterelement und das Sonnenrad zwischen dem ersten Zentralwellenlager und dem zweiten Zentralwellenlager angeordnet.

In einer Ausführungsform ist das Planetenrad am Planetenträger mittels eines Nadellagers gelagert. Dadurch kann eine Stabilität der Motor-Getriebe-Einheit und/oder des Getriebes und Abtriebselements (Kettenrad), erhöht werden, insbesondere dann, wenn das Abtriebselement einseitig belastet ist, wenn die Handwerkzeugmaschine in Betrieb ist.

In einer Ausführungsform ist zwischen dem Rotor und dem Sonnenrad ein Lüfterelement angeordnet und mit der Zentralwelle verbunden. Das Lüfterelement kann dabei insbesondere mittels Presspassung mit der Zentralwelle verbunden sein. Das Lüfterelement kann insbesondere zu einer Kühlung des Elektromotors beitragen und so den Wirkungsgrad des Elektromotors erhöhen. Durch die Anordnung zwischen Sonnenrad und Rotor kann die kompakte Ausgestaltung der Motor-Getriebe-Einheit und damit der Handwerkzeugmaschine unterstützt werden.

In einer Ausführungsform ist das Lüfterelement in einem Lüftergehäuse angeordnet. Eine Öffnung des Lüftergehäuses ist mit einer Gehäuseöffnung des Gehäuses verbunden. Dies kann eine Lüftungswirkung verbessern.

In einer Ausführungsform ist das Lüfterelement ein Flügelrad. Dieses weist ein Befestigungselement auf. Das Befestigungselement ist an der Zentralwelle befestigt, beispielsweise mittels Presspassung. Das Flügelrad ist am Befestigungselement befestigt. Das Befestigungselement kann dabei vom Flügelrad umspritzt oder umgossen sein. Das Flügelrad kann aus Kunststoff bestehen. Das Befestigungselement kann einen metallischen Zentrierring aufweisen oder ein metallischer Zentrierring sein.

Ferner kann eine weitere Gehäuseöffnung vorgesehen sein, die zur gleichen Seite wie die Gehäuseöffnung zeigt und zum Auswurf von Sägespänen geeignet ist. Bevorzugt weisen die Gehäuseöffnungen einen Versatz entlang der Zentralachse zueinander auf. Insbesondere ist eine oder mehrere der Gehäuseöffnungen dazu ausgebildet, Abluft entlang eines äußeren Handschutzbügelbereichs eines Handschutzes zu leiten. So kann erreicht werden, dass Sägespäne an einer die Handwerkzeugmaschine haltenden Hand vorbeigeleitet werden.

In einer Ausführungsform weist das Hohlrad zumindest eine radiale Auskragung auf, mit der eine Drehung des Hohlrades um eine Zentralachse zumindest eingeschränkt werden kann. Die Zentralachse kann dabei der Zentralwelle entsprechen und/oder eine zentrale Achse des Elektromotors sein. Die radiale Auskragung ist insbesondere nach Außen angeordnet. Es können auch mehr als eine radiale Auskragung, beispielsweise zwei, drei oder vier radiale Auskragungen vorgesehen werden. Mit der radialen Auskragung oder den radialen Auskragungen kann erreicht werden, dass das Hohlrad drehfest ist. Es kann vorgesehen sein, dass trotz der Auskragung insbesondere eine axiale Bewegung des Hohlrades und/oder eine Kippbewegung des Hohlrades und/oder eine Taumelbewegung des Hohlrades entlang der beziehungsweise um die Zentralachse ermöglicht sein kann.

In einer Ausführungsform ist die Auskragung in einem Gegenelement des Gehäuses angeordnet. Das Gegenelement kann ein Formschlusselement sein. Gegebenenfalls kann für jede radiale Auskragung ein Gegenelement vorgesehen sein. Das Gegenelement kann als Nut parallel zur Zentralachsrichtung im Gehäuse ausgebildet sein. Seitenwände der Nut verhindern ein Verdrehen der Auskragung um die Zentralachse. Die Nut kann jedoch eine axiale Bewegung der Auskragung ermöglichen. Die Auskragung kann somit drehfest aber nicht ortsfest fixiert werden. Das Gegenelement kann insbesondere eine Bewegung des Hohlrades in Umfangsrichtung einschränken, wobei ein Spiel in Axialrichtung möglich bleiben kann. Dadurch können beispielsweise Toleranzen kompensiert werden. Das Hohlrad kann relativ zur Zentrahlachse zumindest geringfügig kippen. Eine Einseitige Belastung am Abtriebselement bzw. auf den Planetenträger und/oder die Planeten kann kompensiert werden. Ein klemmarmes Abwälzen des Getriebes, insb. der Planetenräder kann ermöglicht werden. Insbesondere kann also das Gegenelement eine drehfeste aber nicht ortsfeste Aufnahme für die Auskragung bereitstellen.

In einer Ausführungsform ist das Abtriebselement ein Kettenrad und treibt eine Kette an. In einer Ausführungsform sind das Kettenrad und der Planetenträger einstückig ausgestaltet. Diese beiden Ausgestaltungen erlauben ebenfalls eine kompakte und stabile Anordnung der Handwerkzeugmaschine, die in diesem Fall insbesondere eine Kettensäge sein kann. Eine Winkelabweichung kann auch durch das Axialspiel der Auskragung des Hohlrads im Gegenelement kompensiert werden.

In einer Ausführungsform ist die Kette um ein Kettenblatt geführt. Die Zentralachse beziehungsweise die Zentralwelle steht im Wesentlichen senkrecht, insbesondere in einem Winkel zwischen 80 und 100 Grad, bevorzugt zwischen 89 und 91 Grad, zum Kettenblatt.

In einer Ausführungsform ist das erste Zentralwellenlager in einer Zentralwellenlageraufnahme des Gehäuses angeordnet. Das Planetenträgerlager ist in einer Planetenträgerlageraufnahme des Gehäuses angeordnet.

Ausführungsbeispiele der Erfindung werden anhand der folgenden Zeichnungen erläutert. In der schematischen Zeichnung zeigen:
- Fig. 1: eine Ansicht einer Handwerkzeugmaschine;
- Fig. 2: einen Querschnitt durch die Handwerkzeugmaschine;
- Fig. 3: einen weiteren Querschnitt durch die Handwerkzeugmaschine;
- Fig. 4: einen weiteren Querschnitt durch die Handwerkzeugmaschine;
- Fig. 5: einen weiteren Querschnitt durch die Handwerkzeugmaschine; und
- Fig. 6: einen weiteren Querschnitt durch die Handwerkzeugmaschine.

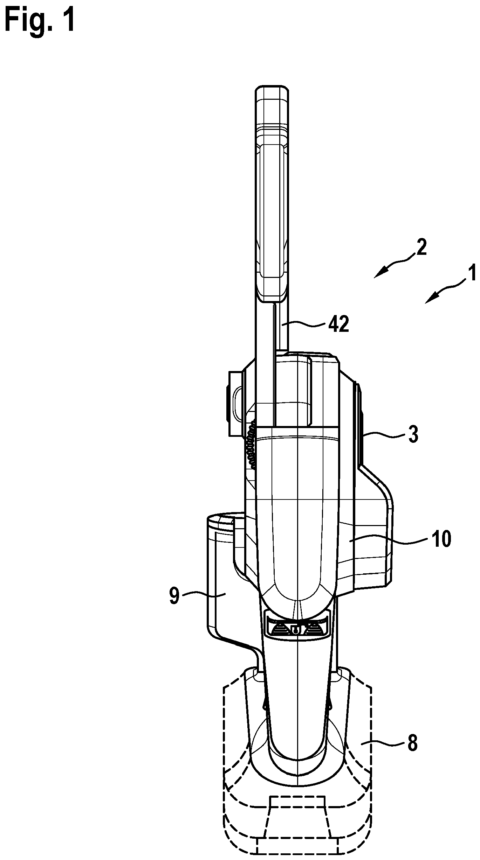

Fig. 1 zeigt eine Ansicht einer Handwerkzeugmaschine 1: Die Handwerkzeugmaschine 1 ist als Kettensäge 2 ausgestaltet. Die Handwerkzeugmaschine 1 beinhaltet ein Gehäuse 3 und eine zumindest teilweise im Gehäuse 3 angeordnete Motor-Getriebe-Einheit 10. Ferner ist in Fig. 1 eine optionale Stromversorgung 8 dargestellt, in diesem Fall ausgestaltet als Akkumulator. Es kann alternativ auch vorgesehen sein, die Stromversorgung 8 mittels eines Stromkabels zu realisieren. Ferner weist das Gehäuse 3 der Handwerkzeugmaschine 1 einen optionalen Handschutz 9 auf, der insbesondere dann vorteilhaft ist, wenn die Handwerkzeugmaschine 1 als Kettensäge 2 ausgestaltet ist. Mit der Motor-Getriebe-Einheit 10 kann die Handwerkzeugmaschine 1 angetrieben werden. Ist die Handwerkzeugmaschine 1 wie in Fig. 1 gezeigt als Kettensäge 2 ausgestaltet, kann insbesondere eine Sägekette 42 mit der Motor-Getriebe-Einheit 10 angetrieben werden.

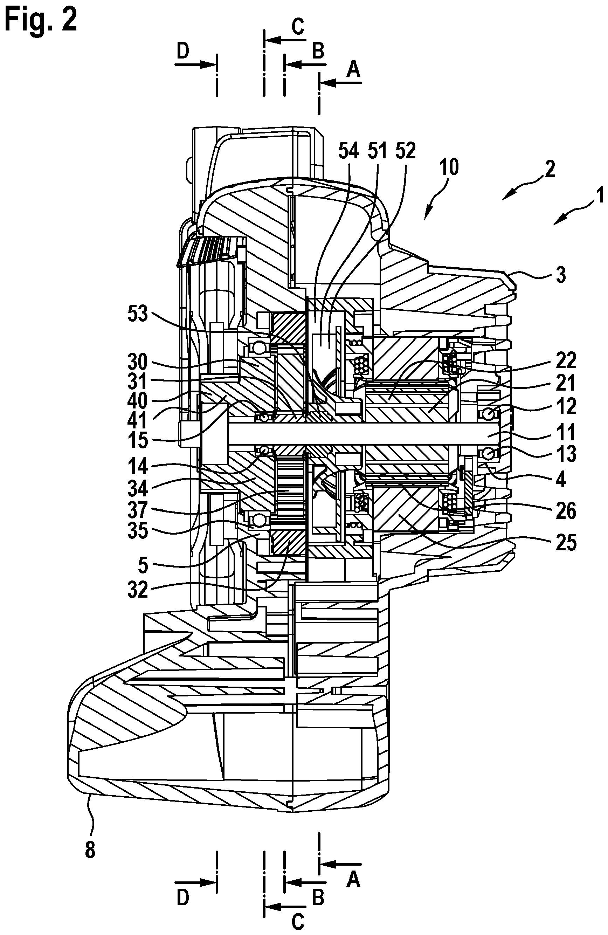

Fig. 2 zeigt einen Querschnitt durch die Handwerkzeugmaschine 1 der Fig. 1. Die Motor-Getriebe-Einheit 10 weist einen Elektromotor 20 und ein Planetengetriebe 30 auf. Der Elektromotor 20 kann beispielsweise über die in Fig. 1 gezeigte Stromversorgung 8 mit Gleichstrom oder Wechselstrom versorgt werden. Das Planetengetriebe 30 weist zumindest ein drehfestes Hohlrad 32, ein vom Elektromotor 20 antreibbares Sonnenrad 31 und zumindest ein an einem Planetenträger 34 gelagertes Planetenrad 37 auf. Ein Abtriebselement 40 der Motor-Getriebe-Einheit 30, hier ausgestaltet als ein Kettenrad 41 zum Antrieb der Sägekette 42, ist mit dem Planetenträger 34 verbunden. Der Planetenträger 34 ist mit einem Planetenträgerlager 35 am Gehäuse 3 gelagert.

Eine solche Anordnung der Motor-Getriebe-Einheit 10 in einer Handwerkzeugmaschine 1 erlaubt eine kompakte Ausgestaltung der Handwerkzeugmaschine 1.

Im Folgenden werden weitere optionale Ausgestaltungen beschrieben, die jeweils einzeln oder in Kombination mit den bereits beschriebenen Merkmalen der Handwerkzeugmaschine 1 vorgesehen sein können.

Es kann vorgesehen sein, dass das Hohlrad 32 ortsfest ist. Dies kann insbesondere bedeuten, dass das Hohlrad 32 axial unverlagerbar ist, also axial nicht verlagert werden kann. Insbesondere kann vorgesehen sein, dass das Hohlrad 32 in der Ausgestaltung der Fig. 2 nicht nach links oder rechts bewegt werden kann. In einer anderen Ausgestaltung kann vorgesehen sein, dass das Hohlrad 32 axial Spiel hat und Bewegungen nach links oder rechts in der Ausgestaltung der Fig. 2 in geringem Umfang möglich sind.

Es kann vorgesehen sein, dass das Planetengetriebe 30 eine Mehrzahl von am Planetenträger 34 gelagerten Planetenrädern 37 aufweist, beispielsweise zwei, drei oder vier Planetenräder 37. Hier sind drei Planetenräder 37 vorgesehen.

In einem Ausführungsbeispiel ist das Abtriebselement 40 einseitig belastet, wenn die Handwerkzeugmaschine 1 in Betrieb ist. Eine solche einseitige Belastung kann insbesondere durch die Sägekette 42 der Kettensäge 2 verursacht sein, es sind jedoch auch alternative Ausgestaltungen einer Handwerkzeugmaschine 1 denkbar, bei der das Abtriebselement 40 einseitig belastet ist. In einer solchen Ausgestaltung kann insbesondere vorgesehen sein, dass das Abtriebselement 40 und der Planetenträger 34 ausschließlich mit dem Planetenträgerlager 35 gelagert sind, so dass insbesondere kein weiteres Lager für den Planetenträger 34 vorgesehen ist. Dadurch wird der kompakte Aufbau der Handwerkzeugmaschine 1 unterstützt.

In einem Ausführungsbeispiel ist eine Zentralwelle 11 mit einem ersten Zentralwellenlager 12 am Gehäuse 3 gelagert. Ein Rotor 21 des Elektromotors 20 ist mit der Zentralwelle 11 fest verbunden. Ein Stator 25 des Elektromotors 20 umgibt den Rotor 21 zumindest teilweise. Das Sonnenrad 31 ist mit der Zentralwelle 11 fest verbunden. Das erste Zentralwellenlager 12 kann dabei ein Gleitlager oder ein Wälzlager, beispielsweise ein erstes Kugellager 13 sein. Die Verbindung zwischen dem Rotor 21 und der Zentralwelle 11 kann beispielsweise mittels einer Presspassung, aber auch als Passfederverbindung oder dergleichen ausgestaltet sein. Es kann vorgesehen sein, dass der Stator 25 den Rotor 21 vollständig umgibt. Insbesondere kann der Stator 25 den Rotor 21 umschließen. Die Verbindung zwischen Sonnenrad 31 und Zentralwelle 11 kann insbesondere als Presspassung oder mit einer anderen Wellen-Naben-Verbindung ausgestaltet sein. Durch die Zentralwelle 11, die gleichzeitig mit dem Sonnenrad 31 des Planetengetriebes 30 und mit dem Rotor 21 des Elektromotors 20 verbunden ist, ergibt sich eine weitere Unterstützung des kompakten Aufbaus der Handwerkzeugmaschine 1.

Der Rotor 21 kann dabei Rotormagnete 22 umfassen und der Stator 25 Statorwicklungen 26. Ein Bestromen der Statorwicklungen 26 kann insbesondere eine Drehbewegung des Rotors 21 zur Folge haben.

In einem Ausführungsbeispiel ist die Zentralwelle 11 mit einem zweiten Zentralwellenlager 14 am Planetenträger 34 gelagert. Das zweite Zentralwellenlager 14 kann insbesondere ein Wälzlager oder ein Gleitlager, beispielsweise ein zweites Kugellager 15 sein. Dies ermöglicht einen stabilen Aufbau der Motor-Getriebe-Einheit 10. Alternativ kann vorgesehen sein, dass die Zentralwelle 11 nur über das Sonnenrad 31 des Planetengetriebes 30 gelagert ist und kein eigenes zweites Zentralwellenlager 14 vorgesehen ist. Diese Ausgestaltung ist nicht in Fig. 2 gezeigt, ergibt sich jedoch, wenn das zweite Zentralwellenlager 14 weggelassen wird.

In einem Ausführungsbeispiel ist das zweite Zentralwellenlager 14 zumindest teilweise in einem Innenbereich des Planetenträgerlagers 35 angeordnet. Insbesondere ist das zweite Zentralwellenlager 14 vollständig in einem Innenbereich des Planetenträgerlagers 35 angeordnet. Insbesondere kann das Planetenträgerlager 35 einen Innenzylinder aufweisen, in dem der Planetenträger 34 zumindest teilweise angeordnet ist. Das zweite Zentralwellenlager 14 kann teilweise und insbesondere vollständig innerhalb des Innenzylinders des Planetenträgerlagers 34 angeordnet sein. Insbesondere kann vorgesehen sein, dass eine Schnittebene durch die Handwerkzeugmaschine 1, die senkrecht zur Zentralwelle 11 steht (und außerdem senkrecht zur Zeichenebene der Fig. 2 ist), sowohl das Planetenträgerlager 35 als auch das zweite Zentralwellenlager 14 schneidet. In einer solchen Anordnung ist das zweite Zentralwellenlager 14 zumindest teilweise in einem Innenbereich des Planetenträgerlagers 35 angeordnet.

In einem Ausführungsbeispiel sind der Rotor 21 und das Sonnenrad 31 zwischen dem ersten Zentralwellenlager 12 und dem zweiten Zentralwellenlager 14 angeordnet. Dies ermöglicht ebenfalls einen kompakten Aufbau der Handwerkzeugmaschine.

In einem Ausführungsbeispiel ist das Planetenrad 37 am Planetenträger 34 mittels eines Nadellagers 38 gelagert. Dadurch kann eine Stabilität der Getriebeeinheit mit Abtriebselement, bzw. der Motor-Getriebe-Einheit 10 erhöht werden, insbesondere dann, bevorzugt wenn das Abtriebselement 40 einseitig belastet ist, wenn die Handwerkzeugmaschine 1 in Betrieb ist. Insbesondere ist diese Ausgestaltung also vorteilhaft, wenn die Handwerkzeugmaschine 1 beispielsweise eine Kettensäge 2 ist.

In einem Ausführungsbeispiel ist das erste Zentralwellenlager 12 in einer Zentralwellenlageraufnahme 4 des Gehäuses 3 angeordnet. Das Planetenträgerlager 35 ist in einer Planetenträgerlageraufnahme 5 des Gehäuses 3 angeordnet.

In einem Ausführungsbeispiel ist zwischen dem Rotor 21 und dem Sonnenrad 31 ein Lüfterelement 51 angeordnet und mit der Zentralwelle 11 verbunden. Das Lüfterelement 51 kann dabei insbesondere mittels Presspassung oder mittels einer Passfederverbindung mit der Zentralwelle 11 verbunden sein. Das Lüfterelement 51 kann insbesondere zu einer Kühlung des Elektromotors 20 beitragen und so den Wirkungsgrad des Elektromotors 20 erhöhen. Durch die Anordnung zwischen Sonnenrad 31 und Rotor 21 kann die kompakte Ausgestaltung der Motor-Getriebe-Einheit 10 und damit der Handwerkzeugmaschine 1 unterstützt werden.

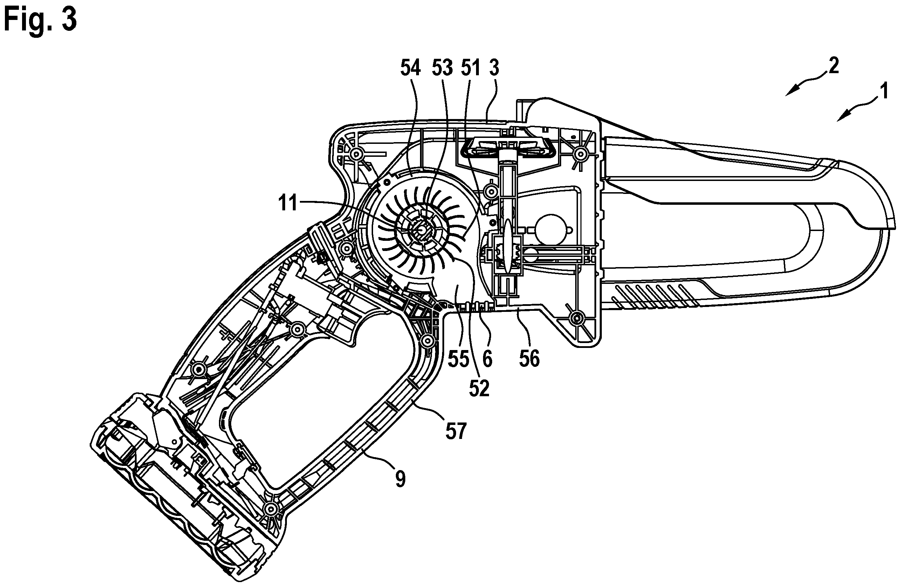

Fig. 3 zeigt einen weiteren Querschnitt durch die Handwerkzeugmaschine 1 der Fig. 1 und 2 durch die in Fig. 2 mit A bezeichneten Schnittebene. In einem Ausführungsbeispiel ist das Lüfterelement 51 in einem Lüftergehäuse 54 angeordnet ist, wobei eine Öffnung 55 des Lüftergehäuses 54 mit einer Gehäuseöffnung 6 des Gehäuses 3 verbunden ist. Dies kann eine Lüftungswirkung verbessern.

In einem Ausführungsbeispiel weist das Lüfterelement 51 ein Flügelrad 52 und ein Befestigungselement 53 auf. Das Befestigungselement 53 ist an der Zentralwelle 11 befestigt. Das Befestigungselement 53 ist an der Zentralwelle 11 beispielsweise mittels Presspassung oder Passfederverbindung befestigt. Das Flügelrad 52 ist am Befestigungselement 53 befestigt. Das Befestigungselement 53 kann dabei durch das Flügelrad 52 umspritzt oder umgossen sein. Das Befestigungselement 53 kann einen metallischen Zentrierring aufweisen oder ein metallischer Zentrierring sein. Das Flügelrad 52 kann aus Kunststoff, insbesondere eine Kunststoffverbundwerkstoff gebildet sein.

Ferner ist in Fig. 3 eine weitere Gehäuseöffnung 56 gezeigt, die zur gleichen Seite wie die Gehäuseöffnung 6 zeigt und zum Auswurf von Sägespänen geeignet ist. Bevorzugt weisen die Gehäuseöffnungen 6, 56 einen Versatz entlang der Zentralachse zueinander auf. Insbesondere ist eine oder mehrere der Gehäuseöffnungen 6, 56 dazu ausgebildet, Abluft entlang eines äußeren Handschutzbügelbereichs 57 des Handschutzes 9 zu leiten. So kann erreicht werden, dass Sägespäne an einer die Handwerkzeugmaschine haltenden Hand vorbeigeleitet werden.

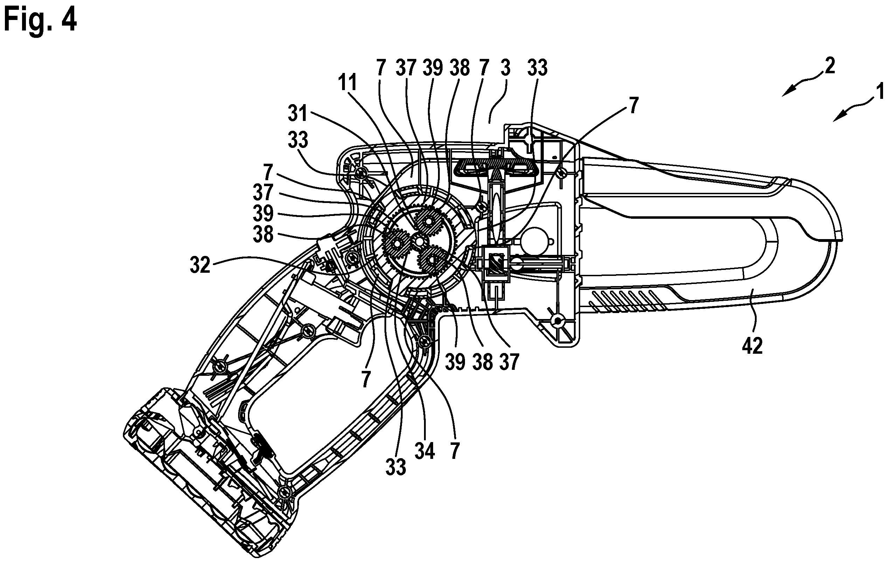

Fig. 4 zeigt einen weiteren Querschnitt durch die Handwerkzeugmaschine 1 der Fig. 1 bis 3 durch die in Fig. 2 mit B bezeichneten Schnittebene. In einem Ausführungsbeispiel weist das Hohlrad 32 zumindest eine radiale Auskragung 33 auf, mit der eine Drehung des Hohlrades 32 um eine Zentralachse zumindest eingeschränkt, insbesondere verhindert werden kann. Die Zentralachse kann dabei der Zentralwelle 11 entsprechen, parallel zur Zentralwelle 11 angeordnet sein oder eine zentrale Achse des Elektromotors 20 sein. Die radiale Auskragung ist insbesondere nach Außen angeordnet. Sie weist insbesondere eine rechteckige Grundform auf. Es können auch mehr als eine radiale Auskragung 33, beispielsweise zwei, drei, vier oder mehr radiale Auskragungen 33, vorgesehen werden. Als Auskragung, als Ummantelung der Auskragung oder anstatt der Auskragung, insbesondere als Ummantelung des Hohlrades, könnte alternativ auch ein elastisches Verbindungselement, insbesondere ein elastischer Ring, beispielsweise aus einem gummielastischen Werkstoff, vorgesehen sein. Mit der radialen Auskragung 33 oder den radialen Auskragungen 33 kann erreicht werden, dass das Hohlrad drehfest ist. Auch das Gegenelement 7 könnte elastisch ausgebildet sein, insbesondere axial und/oder auch radial zur Zentralachse, beispielsweise um eine geringfügige Bewegung in axialer, radialer und/oder Umfangsrichtung des Hohlrades zu ermöglichen.

In einem Ausführungsbeispiel ist die Auskragung 33 in einem Gegenelement 7 des Gehäuses 3 angeordnet ist. Das Gegenelement 7 kann ein Formschlusselement sein. Gegebenenfalls kann für jede radiale Auskragung 33 ein Gegenelement 7 vorgesehen sein. Das Gegenelement 7 kann insbesondere eine Bewegung des Hohlrades 32 in Umfangsrichtung einschränken, wobei ein Spiel in Axialrichtung möglich bleiben kann.

Anstelle der radialen Auskragungen 33 und der Gegenelemente 7 kann auch vorgesehen sein, dass Gehäuseelemente in Ausnehmungen des Hohlrades 32 eingreifen und so ebenfalls eine Drehung des Hohlrades 32 um eine Zentralachse zumindest einschränken (nicht gezeigt).

Mit den radialen Auskragungen 33 und den Gegenelementen 7 oder alternativ mit den nicht gezeigten Gehäuseelementen und Ausnehmungen des Hohlrades 32 kann insbesondere eine Selbstzentrierung des Hohlrades 32 erreicht werden, so dass während eines Einlaufens, Anlaufens und/oder unter Belastung im Betrieb der Handwerkzeugmaschine 1 ein gewisses Spiel vorliegt, so dass eine Wahrscheinlichkeit für eine Beschädigung des Planetengetriebes 30 verringert und so eine Lebensdauer der Handwerkzeugmaschine 1 erhöht werden kann. Die radialen Auskragungen 33 sind in Fig. 4 derart angeordnet, dass sie gleichmäßig über das Hohlrad 32 verteilt sind, hier also in einem Winkel von 120 Grad zueinander angeordnet sind. Selbstverständlich sind auch andere Winkel möglich und es ist ferner möglich, dass die radialen Auskragungen 33 nicht gleichmäßig verteilt sind.

Ein Übersetzungsverhältnis des Planetengetriebes 30 kann dabei zwischen 3 und 6 sein, beispielsweise 3,6 oder 4,6 oder 5,5. Dies kann bedeuten, dass sich das Sonnenrad 31 zwischen dreimal und sechsmal schneller dreht als der Planetenträger 34, insbesondere 3,6-mal, 4,6-mal oder 5,5-mal schneller. Das Übersetzungsverhältnis kann durch geeignete Wahl einer Anzahl von Zähnen des Hohlrades 32, Planetenrades 37 und/oder des Sonnenrades 31 festgelegt werden.

Ebenfalls in Fig. 4 dargestellt ist, dass das Planetengetriebe 30 drei Planetenräder 37 mit drei Nadellagern 38 aufweist, die jeweils an einem Lagerstift 39 angerordnet sind. Die Lagerstifte 39 können dabei in den Planetenträger 34 gesteckt sein, beispielsweise als Presspassung, so dass die Lagerstifte 39 fest mit dem Planetenträger 34 verbunden sind.

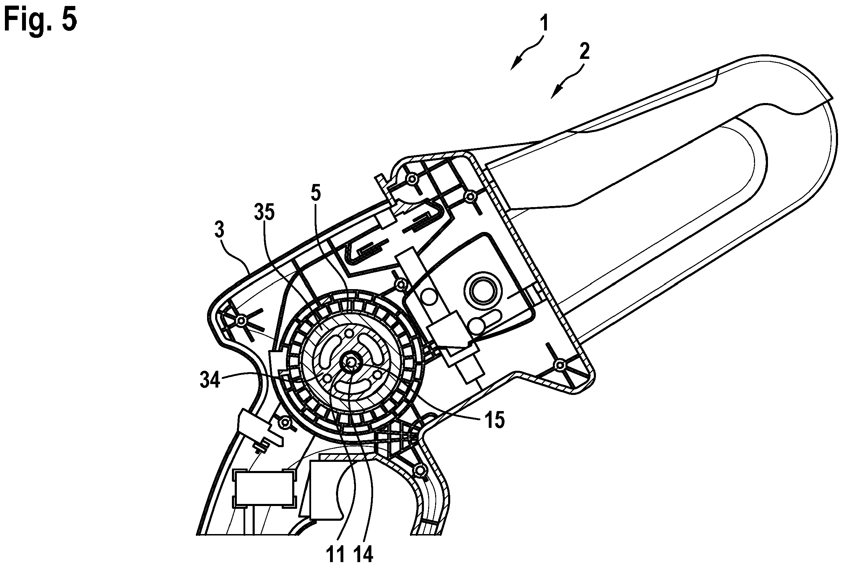

Fig. 5 zeigt einen weiteren Querschnitt durch die Handwerkzeugmaschine 1 der Fig. 1 bis 4 durch die in Fig. 2 mit C bezeichneten Schnittebene. Diese Schnittebene ist durch das Planetenträgerlager 35 und das zweite Zentralwellenlager 14 geführt. Das Planetenträgerlager 35 und das zweite Zentralwellenlager 14 teilen sich also zumindest die Schnittebene der Fig. 5, so dass das zweite Zentralwellenlager 14 zumindest teilweise innerhalb des Planetenträgerlagers 35 angeordnet ist. Insbesondere kann das zweite Zentralwellenlager 14 vollständig innerhalb des Planetenträgerlagers 35 angeordnet sein.

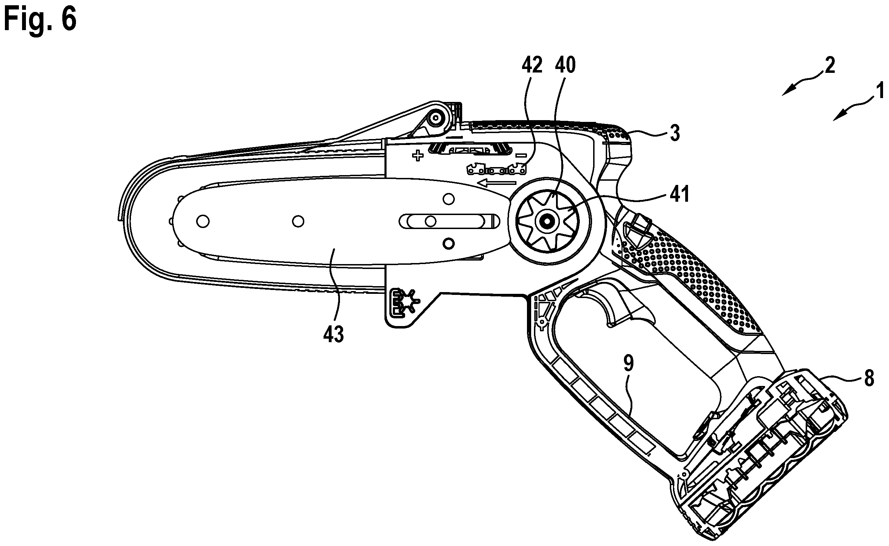

Fig. 6 zeigt einen weiteren Querschnitt durch die Handwerkzeugmaschine 1 der Fig. 1 bis 5 durch die in Fig. 2 mit D bezeichneten Schnittebene. In einem Ausführungsbeispiel ist das Abtriebselement 40 ein Kettenrad 41. Das Kettenrad 41 treibt eine Kette 42 an. In einem Ausführungsbeispiel, wie in Fig. 6 ebenfalls gezeigt, sind das Kettenrad 41 und der Planetenträger 34 einstückig ausgestaltet. Diese beiden Ausgestaltungen erlauben ebenfalls eine kompakte und stabile Anordnung der Handwerkzeugmaschine 1, die in diesem Fall insbesondere eine Kettensäge 2 ist.

In einem Ausführungsbeispiel ist die Kette 42 um ein Kettenblatt 43 geführt. Die Zentralwelle 11 steht im Wesentlichen senkrecht zum Kettenblatt 43. Dies kann insbesondere bedeuten, dass ein Winkel zwischen der Zentralwelle 11 und dem Kettenblatt 43 zwischen 80 und 100 Grad, bevorzugt zwischen 89 und 91 Grad, beträgt.

Obwohl die Erfindung im Detail durch die bevorzugten Ausführungsbeispiele beschrieben wurde, ist die Erfindung nicht auf die offenbarten Beispiele eingeschränkt und andere Variationen hieraus können vom Fachmann abgeleitet werden, ohne den Schutzumfang der Erfindung zu verlassen.

## Patentansprüche

1. Handwerkzeugmaschine (1), insbesondere Kettensäge (2), mit einer Motor-Getriebe-Einheit (10) und einem Gehäuse (3), wobei die Motor-Getriebe-Einheit (10) zumindest teilweise innerhalb des Gehäuses (3) angeordnet ist, wobei die Motor-Getriebe-Einheit (10) einen Elektromotor (20) und ein Planetengetriebe (30) aufweist, wobei das Planetengetriebe (30) zumindest ein drehfestes Hohlrad (32), ein vom Elektromotor (20) antreibbares Sonnenrad (31) und zumindest ein an einem Planetenträger (34) gelagertes Planetenrad (37) aufweist, wobei ein Abtriebselement (40) der Motor-Getriebe-Einheit (30), insbesondere ein Kettenrad (41) zum Antrieb einer Sägekette (42), mit dem Planetenträger (34) verbunden ist, wobei der Planetenträger (34) mit einem Planetenträgerlager (35) am Gehäuse (3) gelagert ist.

2. Handwerkzeugmaschine (1) nach Anspruch 1, wobei das Abtriebselement (40) einseitig belastet ist, insbesondere wenn die Handwerkzeugmaschine (1) in Betrieb ist.

3. Handwerkzeugmaschine (1) nach Anspruch 1 oder 2, wobei eine Zentralwelle (11) mit einem ersten Zentralwellenlager (12) am Gehäuse (3) gelagert ist, wobei ein Rotor (21) des Elektromotors (20) mit der Zentralwelle (11) fest verbunden ist, wobei ein Stator (25) des Elektromotors (20) den Rotor (21) zumindest teilweise umgibt, wobei das Sonnenrad (31) mit der Zentralwelle (11) fest verbunden ist.

4. Handwerkzeugmaschine (1) nach Anspruch 3, wobei die Zentralwelle (11) mit einem zweiten Zentralwellenlager (14) am Planetenträger (32) gelagert ist.

5. Handwerkzeugmaschine (1) nach Anspruch 4, wobei das zweite Zentralwellenlager (14) zumindest teilweise in einem Innenbereich des Planetenträgerlagers (35) angeordnet ist.

6. Handwerkzeugmaschine (1) nach Anspruch 4 oder 5, wobei der Rotor (21) und das Sonnenrad (31) zwischen dem ersten Zentralwellenlager (12) und dem zweiten Zentralwellenlager (14) angeordnet sind.

7. Handwerkzeugmaschine (1) nach einem der Ansprüche 3 bis 6, wobei zwischen dem Rotor (21) und dem Sonnenrad (31) ein Lüfterelement (51) angeordnet und mit der Zentralwelle (11) verbunden ist.

8. Handwerkzeugmaschine (1) nach einem der Ansprüche 1 bis 7, wobei das Planetenrad (37) am Planetenträger (34) mittels eines Nadellagers (38) gelagert ist.

9. Handwerkzeugmaschine (1) nach Anspruch 7, wobei das Lüfterelement (51) in einem Lüftergehäuse (54) angeordnet ist, wobei eine Öffnung (55) des Lüftergehäuses (54) mit einer Gehäuseöffnung (6) des Gehäuses (3) verbunden ist, insbesondere wobei die Gehäuseöffnung (6) zur gleichen Seite wie eine weitere Gehäuseöffnung (56) zum Auswurf von Sägespänen geöffnet ist, bevorzugt wobei die Gehäuseöffnungen (6, 56) einen Versatz entlang der Zentralachse zueinander aufweisen, insbesondere wobei die Gehäuseöffnung (6, 56) dazu ausgebildet ist, Abluft entlang eines äußeren Handschutzbügelbereichs (57) eines Handschutzes (9) zu leiten.

10. Handwerkzeugmaschine (1) nach Anspruch 7 oder 9, wobei das Lüfterelement (51) ein Flügelrad (52) und ein Befestigungselement (53) aufweist, wobei das Befestigungselement (53) an der Zentralwelle (11) befestigt ist und wobei das Flügelrad (52) am Befestigungselement (53) befestigt ist.

11. Handwerkzeugmaschine (1) nach einem der Ansprüche 1 bis 10, wobei das Hohlrad (32) zumindest eine radiale Auskragung (33) aufweist, wobei mit der Auskragung (33) insbesondere eine Drehung des Hohlrades (32) um eine Zentralachse zumindest eingeschränkt werden kann, bevorzugt wobei trotz der Auskragung (33) eine axiale Bewegung des Hohlrades (32) und/oder eine Kippbewegung des Hohlrades (32) und/oder eine Taumelbewegung des Hohlrades (32) entlang der beziehungsweise um die Zentralachse ermöglicht sein kann.

12. Handwerkzeugmaschine (1) nach Anspruch 11, wobei die Auskragung (33) in einem Gegenelement (7) des Gehäuses (3) angeordnet ist, evorzugt wobei das Gegenelement (7) als Nut parallel zur Zentralachsrichtung im Gehäuse (3) ausgebildet ist, insbesondere wobei das Gegenelement (7) eine drehfeste aber nicht ortsfeste Aufnahme für die Auskragung (33) bereitstellt.

13. Handwerkzeugmaschine (1) nach einem der Ansprüche 1 bis 12, wobei das Abtriebselement (40) ein Kettenrad (41) ist und eine Kette (42) antreibt.

14. Handwerkzeugmaschine (1) nach Anspruch 13, wobei das Kettenrad (41) und der Planetenträger (34) einstückig ausgestaltet sind.

15. Handwerkzeugmaschine (1) nach Anspruch 13 oder 14, wobei die Kette (42) um ein Kettenblatt (43) geführt ist, wobei die Zentralwelle (11) im Wesentlichen senkrecht zum Kettenblatt (43) steht, bevorzugt zwischen 89 und 91 Grad.
